# EUROPEAN PATENT APPLICATION

(11) **EP 4 566 728 A1**
(43) Date of publication of application: **11.06.2025**
(21) Application number: 23873054.3
(22) Date of filing: 26.09.2023
(51) Int. Cl.: B08B 1/00, B08B 1/20, B08B 3/04, H01M 4/04

(54) **METHOD AND APPARATUS FOR CLEANING ROLLING ROLL FOR ELECTRODE**

(30) Priority: 30.09.2022 KR 20220125135; 25.09.2023 KR 20230127648
(71) Applicant: LG Energy Solution, Ltd., Seoul 07335 (KR)
(72) Inventor: YOON, Tae Gyun, Daejeon 34122 (KR); PARK, Jinhui, Daejeon 34122 (KR); CHOI, Jaehyuk, Daejeon 34122 (KR); LEE, Jung Eun, Daejeon 34122 (KR); CHOY, Sang Hoon, Daejeon 34122 (KR); SEOL, Jeong Soo, Daejeon 34122 (KR)
(74) Representative: Plasseraud IP
(86) International application number: PCT/KR2023/014729
(87) International publication number: WO 2024/071939

(57) **Abstract**

A method for automatically cleaning a pressing roll used in the electrode roll-pressing process according to one embodiment of the present disclosure comprises the steps of: determining whether or not the pressing roll is in a non-operative state, and cleaning the pressing roll in a first cleaning mode when the pressing roll is in a non-operative state, wherein the first cleaning mode performs cleaning of the pressing roll in a state that an electrode pressing process on the pressing roll stops.

## Description

### [TECHNICAL FIELD]

### Cross Citation with Related Application(s)

This application claims the benefit of Korean Patent Application No. 10-2022-0125135 filed on September 30, 2022 and Korean Patent Application No. 10-2023-0127648 filed on September 25, 2023 in the Korean Intellectual Property Office, the disclosures of which are incorporated herein by reference in their entirety.

The present disclosure relates to a method and apparatus for cleaning a pressing roll used in the electrode manufacturing process, and more particularly, to a pressing roll cleaning method and apparatus for automatically cleaning a pressing roll when the pressing roll is operated and not operated.

### [BACKGROUND]

As the price of energy sources increases due to depletion of fossil fuels and the interest in environmental pollution increases, the demand for environmentally friendly alternative energy sources becomes an indispensable factor for future life. Especially, as technology development and demand for mobile devices are increasing, demand for secondary batteries as energy sources is rapidly increasing.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having high energy density, discharge voltage, and output stability.

Generally, in order to prepare a secondary battery, a positive electrode and a negative electrode are formed by applying an electrode mixture containing an electrode active material to a surface of a current collector, then a separate is interposed therebetween to thereby make an electrode assembly, which is then mounted in a cylindrical or prismatic metal can or inside a pouch-type case of an aluminum laminate sheet, and a liquid electrolyte or a solid electrolyte is injected or impregnated into the electrode assembly to prepare a secondary battery.

Further, secondary batteries are classified according to the structure of the electrode assembly having a positive electrode/separator/negative electrode structure. Representative examples thereof include a jelly-roll (wound) electrode assembly in which long sheet type positive electrodes and negative electrodes are wound with a separator interposed therebetween, a stacked electrode assembly in which a plurality of positive and negative electrodes cut in a prescribed size unit are sequentially stacked with a separator interposed therebetween, and a stacked/foldable electrode assembly in which bi-cells or full cells, in which positive and negative electrodes of a prescribed unit are stacked with a separator interposed therebetween, are wound with a separator sheet.

On the other hand, the electrode generates a current through the exchange of ions, and the positive electrode and negative electrode constituting the electrode has a structure in which the electrode active material is applied to the electrode current collector made of metal.

A separator is positioned between the positive electrode and the negative electrode of the battery to perform insulation and maintain an electrolyte solution to provide a passage for ionic conduction.

A roll press process, a slitting process, a notching process, a lamination process, or a folding process for manufacturing the electrode, the separator, and the like are mostly performed by a roll-to-roll process. Herein, the roll-to-roll process refers to a process in which a plurality of bendable metal foils and the like move between rollers and perform a process such as coating and printing.

That is, for example, by unwinding the roll that winds the flexible, thin sheet-like material, materials are supplied, the supplied materials are coated and printed, and then the processed materials are rewound and retrieved from another roll. In particular, positive and negative electrodes for secondary batteries are made by applying a positive electrode active material or a negative electrode active material onto a sheet and pressing the sheet.

In this roll-pressing process, when pressing is repeatedly performed, if active materials or other foreign materials remaining after pressing are attached to the roll, foreign materials may adhere to the electrode in the subsequent roll-pressing process, thereby reducing the quality of the electrode and the battery including the same. Thus, a pressing roll cleaning apparatus for removing contaminants of a pressing roll is used.

In the conventional pressing roll cleaning apparatus, while the pressing roll is being driven to manufacture the electrode, the cleaning liquid is sprayed on a cleaning unit such as a cleaning roller through a nozzle, and the pressing roll is wiped with a cleaning unit sprayed with cleaning liquid.

Nevertheless, if contaminants are present on the surface of the pressing roll, the driving of the pressing roll is stopped, and an operator uses a wiper or the like to remove contaminants on the surface of the pressing roll. This becomes a factor that reduces the production efficiency in electrode manufacturing.

On the other hand, when cleaning the pressing roll during the process of manufacturing an electrode while the pressing roll is being driven, there are restrictions on the type and amount of cleaning liquid used in order to maintain the residual moisture content in the electrodes. Thereby, oil-based cleaning liquids containing oil components are mainly used.

However, when using such an oil-based cleaning liquid, there was a limitation in removing contaminants. For example, in the case of the negative electrode pressing roll for pressing the negative electrode of the secondary battery, the solvent of the negative electrode is water, and thus there was a limitation in removing contaminants from the negative electrode pressing roll with only oil-based cleaning oil. Therefore, the contaminants could not be completely removed and the contaminants were likely to remain. Likewise, when pressing an electrode using a pressing roll in a state where contaminants remain, there was a problem in that defects such as occurrence of being stamped of the electrode surface and detachment of electrodes due to contaminants on the pressing roll surface were generated.

Therefore, there is a need to develop a method and apparatus for solving the above problems and more efficiently cleaning the pressing roll.

### [DETAILED DESCRIPTION OF THE INVENTION]

### [Technical Problem]

It is an object of the present disclosure to provide a method and apparatus for more efficiently cleaning a pressing roll used in the electrode manufacturing process, and specifically, a method and apparatus for cleaning a pressing roll for electrode manufacture even during non-operation of the pressing roll, and also automatically performing the cleaning of a pressing roll.

However, the technical problems to be solved by the embodiments of the present disclosure are not limited to the above-described problems, and can be variously expanded within the scope of the technical idea included in the present disclosure.

### [Technical Solution]

According to one embodiment of the present disclosure, there is provided a method for automatically cleaning a pressing roll used in an electrode roll-pressing process, the method comprising the steps of: determining whether or not the pressing roll is in a non-operative state, and cleaning the pressing roll in a first cleaning mode when the pressing roll is in a non-operative state, wherein, in the first cleaning mode, cleaning of the pressing roll is performed in a state that the electrode roll-pressing process on the pressing roll stops.

The method further comprises cleaning the pressing roll in a second cleaning mode when the pressing roll is in an operative state, wherein, in the second cleaning mode, the cleaning of the pressing roll is performed, while the electrode roll-pressing process on the pressing roll is performed at the same time.

At least one of the type of cleaning liquid, the frequency and amount of supply of the cleaning liquid, and the moving speed of the cleaning cloth is different, in the first cleaning mode and the second cleaning mode.

The step of determining whether or not the pressing roll is in a non-operative state may comprise: a step of receiving input of the rotation speed of the pressing roll; a step of counting the waiting time of the pressing roll when the rotation speed of the pressing roll is zero; and a step of determining that the pressing roll is in a non-operative state when a first predetermined time exceeds in a state that the rotation speed of the pressing roll is zero.

The step of determining whether or not the pressing roll is in a non-operative state may comprise a step of receiving input of the position of the pressing roll, a step of counting the waiting time of the pressing roll when the pressing roll is at a predetermined waiting position; and a step of determining that the pressing roll is in a non-operative state when a second predetermined time exceeds in a state where the pressing roll is at the predetermined waiting position.

The step of determining whether or not the pressing roll is in a non-operative state may comprise a step of receiving input of the rotation speed and position of the pressing roll, a step of counting the waiting time of the pressing roll when the rotation speed of the pressing roll is zero, a step of counting the waiting time of the pressing roll when the pressing roll is at a predetermined waiting position, and a step of determining that the pressing roll is in a non-operative state when a first predetermined time exceeds in a state that the rotation speed of the pressing roll is zero and a second predetermined time exceeds in a state that the pressing roll is at the predetermined waiting position.

The step of cleaning the pressing roll in the first cleaning mode may comprise a step of measuring the brightness value of the surface of the pressing roll, and a step of cleaning the pressing roll for a third predetermined time when the brightness value of the surface of the pressing roll is less than or equal to the first predetermined brightness value.

The step of cleaning the pressing roll in the first cleaning mode further comprises a step of measuring the brightness value of the surface of the cleaned pressing roll and determining whether or not the brightness value is greater than or equal to a second predetermined brightness value, wherein the step of cleaning in the first cleaning mode may be automatically ended when the brightness value of the surface of the pressing roll is greater than or equal to the second predetermined brightness value.

The step of cleaning the pressing roll in the first cleaning mode may further comprise a step of measuring the brightness value of the surface of the cleaned pressing roll and determining whether or not the brightness value is greater than or equal to a second predetermined brightness value, wherein the step of cleaning the pressing roll for the third predetermined time is repeated when the brightness value of the surface of the pressing roll is less than the second predetermined brightness value.

The third predetermined time may be a time selected from any one of 3 minutes to 10 minutes.

The second predetermined brightness value may be greater than the first predetermined brightness value.

The first predetermined brightness value may be 40%, and the second predetermined brightness value may be 80%.

The frequency and amount of supply of the cleaning liquid in the first cleaning mode may be greater than the frequency and amount of supply of the cleaning liquid in the second cleaning mode.

The cleaning liquid provided in the first cleaning mode may be an oil-based cleaning agent.

The cleaning liquid provided in the first cleaning mode may be any one selected from water, acetone, an aqueous cleaning liquid, or a combination of at least two selected from them.

The cleaning liquid provided in the second cleaning mode may be an oil-based cleaning agent.

An apparatus for automatically cleaning a pressing roll for performing the method according to the above-mentioned embodiments may comprise a sensor unit that measures a brightness value of the surface of the pressing roll, a cleaning liquid supply unit that supplies the cleaning liquid to the pressing roll, a cleaning unit that cleans the surface of the pressing roll, and a control unit that receives input of data from the sensor unit and controls whether or not the cleaning liquid supply unit and the cleaning unit operate.

The cleaning liquid supply unit is provided in a plurality of numbers, some of the plurality of cleaning liquid supply units supply an oil-based cleaning agent, and the remainder of the plurality of cleaning liquid supply units may supply any one of water, acetone, an aqueous cleaning liquid, or a combination of at least two selected from them.

The cleaning apparatus is provided in a plurality of numbers, and some of the plurality of cleaning apparatuses are apparatuses for the first cleaning mode, and the remainder of the plurality of cleaning apparatuses may be apparatuses for the second cleaning mode.

### [Advantageous Effects]

According to the embodiments of the present disclosure, the pressing roll for electrode manufacture is cleaned even during non-operation of the pressing roll, and the cleaning of the pressing roll is automatically started and ended, thereby increasing the cleaning efficiency of the pressing roll. Accordingly, the manufacturing efficiency of the electrode process is also increased. In addition, since electrodes are manufactured with cleaned pressing rolls according to an improved cleaning method, the battery performance can be improved.

### [BRIEF DESCRIPTION OF THE DRAWINGS]

FIG. 1 illustrates a pressing roll cleaning apparatus for performing a pressing roll cleaning method according to embodiments of the present disclosure; and
FIGS. 2 to 5 illustrate flowcharts of the pressing roll cleaning methods according to embodiments of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

A description of portions that are irrelevant to the description will be omitted for clarity, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not necessarily mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

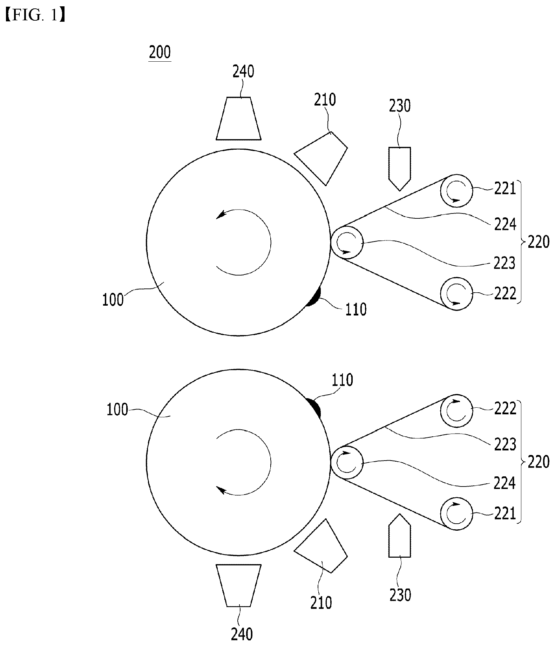

Now, an apparatus for automatically cleaning a pressing roll used in an electrode roll-pressing process and a method for automatically cleaning the pressing roll according to an embodiment of the present disclosure will be described with reference to FIG. 1 and FIGS. 2 to 5, respectively.

First, an apparatus for automatically cleaning a pressing roll used in an electrode roll-pressing process and a method for automatically cleaning the pressing roll according to an embodiment of the present disclosure primarily perform cleaning in a first cleaning mode and cleaning in a second cleaning mode.

A first cleaning mode is a mode in which cleaning is performed on the pressing roll 100 in a state that an electrode roll-pressing process on the pressing roll 100 stops. A second cleaning mode is a mode in which an electrode roll-pressing process is performed on the pressing roll 100 and at the same time, cleaning is performed on the pressing roll 100. To explain further, the first cleaning mode is a mode in which the pressing roll 100 is cleaned when the electrode roll-pressing process is stopped and the equipment is not operated.

The first cleaning mode includes cases where the electrode roll-pressing process is stopped nonperiodically, and also includes cases where the electrode roll-pressing process is stopped periodically. For example, the case where the process is stopped nonperiodically may be a case where the equipment is stopped due to the occurrence of a defect in the electrode pressing equipment or during previous or subsequent processes, or a case where the operation of the pressing roll 100 is stopped for reasons such as inspecting or replacing equipment. Alternatively, the case where the process is stopped periodically may be a case where the time to complete the electrode roll-pressing process is set separately so that the equipment is not operated for a predetermined time after the electrode roll-pressing process is completed.

The second cleaning mode is a mode in which cleaning of the pressing roll 100 is performed while the pressing roll 100 rotates during the electrode roll-pressing process, that is, while the equipment is operating, and at the same time, foreign materials 110 generated on the surface of the pressing roll 100 are cleaned in real time.

FIG. 1 illustrates a pressing roll 100 used in an electrode roll-pressing process and an apparatus 200 for automatically cleaning the pressing roll (hereinafter referred to as "pressing roll cleaning apparatus" for convenience).

The pressing roll cleaning apparatus 200 largely includes a sensor unit 210 that measures a brightness value of the surface of the pressing roll 100, a cleaning unit 220 that cleans the surface of the pressing roll 100, a cleaning liquid supply unit 230 that supplies the cleaning liquid to the cleaning unit 220, and a drying unit 240 that dries the surface of the pressing roll 100 cleaned with a cleaning liquid. The cleaning unit 220 includes a supply roll 221 that feeds a cleaning cloth 224 and a wind-up roll 222 that rewinds the cleaned cleaning cloth 224, and includes a cleaning roll (e.g., nip roll) 223 that increases the close adhesion of the cleaning cloth 224 to improve the cleaning power to the pressing roll 100.

The sensor unit 210 measures the brightness value of the surface of the pressing roll 100. The brightness value may also be calculated by sensing the entire surface of the pressing roll 100, that is, by sensing the half of the outer peripheral surface of the cylindrical pressing roll 100 on the side where the sensor unit 210 is located. In FIG. 1, one sensor unit 210 is illustrated for convenience, but the present disclosure is not limited thereto, and two sensor units 210 are arranged on both sides of the pressing roll 100 to face each other, so that the sensor units 210 on both sides may also sense each half of the pressing roll 100 to calculate the brightness value.

Alternatively, the sensor unit 210 can be modified and changed in various ways, for example, it may scan while moving along the length or circumference of the cylindrical pressing roll 100, or scan while spirally moving the outer peripheral surface of the cylindrical pressing roll 100.

In addition, optionally, the sensor unit 210 may also determine a part where the brightness value is particularly low compared to the peripheral part to be foreign materials 110, thereby detecting the foreign materials 110.

Since the cleaning unit 220 must first remove foreign materials attached to the pressing roll 100 after pressing, it is located at the closest place based on the rotational direction of the pressing roll 100 from the point where the pressing roll 100 presses the electrode.

The cleaning cloth 224 is unwound from the supply roll 221 and transferred to a cleaning roll 223. The cleaning roll 223 is adjacent to the surface of the pressing roll 100, so that one side of the cleaning cloth 224 can be brought into contact with the pressing roll 100. The cleaning cloth 224 that has passed through the cleaning roll 223 is recovered by a wind-up roll 222. The cleaning roll 223 usually has a roll shape for smooth transport of the cleaning cloth 224, and in this case, the cleaning roll 223 can rotate simultaneously according to the movement of the cleaning cloth 224. When the contact portion between the cleaning roll 223 and the pressing roll 100 is rounded as described above, the pressing roll 100 can be prevented from being damaged during contact of the cleaning cloth 224 and the pressing roll 100. On the other hand, if the cleaning roll 223 can allow the cleaning cloth 224 to make contact with the pressing roll 100 while guiding the transfer of the cleaning cloth 224, the shape and structure thereof are not limited.

The cleaning cloth 224 can smoothly absorb or remove foreign materials attached to the pressing roll 100, and the type thereof is not limited as long as it does not damage the surface of the pressing roll 100, but a non-woven fabric is preferred from the viewpoint of cleaning ability. In addition, the material of the non-woven fabric is not limited in terms of the type as long as it can absorb or remove foreign materials, and for example, cotton fibers, polyethylene fibers, polypropylene fibers, polyester, aramid fibers, cellulose fibers, rayon fibers, or non-woven fabrics blended with them can be used.

The cleaning liquid supply unit 230 sprays the cleaning liquid onto the cleaning cloth 224. The cleaning liquid supply unit 230 may be provided in a plurality of numbers. For example, a cleaning liquid supply unit that supplies water and a cleaning liquid supply unit that supplies acetone may be provided, respectively. In addition, the cleaning liquid supply unit 230 may, although not illustrated in detail in FIG. 1, include a cleaning liquid storage tank, a cleaning liquid transfer pipe, a pump, a valve, and/or a nozzle, etc., and various modifications and changes can be made to the structure, shape, number, and the like of the detailed components of the cleaning liquid supply unit 230 in accordance with the environment in which embodiments described herein are implemented.

The type of the cleaning liquid is not limited as long as it can smoothly remove foreign materials, and the like. For example, the cleaning liquid may include water, acetone, dimethyl carbonate, dimethyl formamide, N-methyl formamide, sulfolane (tetrahydrothiophene-1,1-dioxide), 3-methylsulfolane, N-butyl sulfone, dimethyl sulfoxide, pyrrolidinone (HEP), dimethylpiperidone (DMPD), N-methyl pyrrolidinone (NMP), N-methyl acetamide, dimethyl acetamide (DMAc), dimethylformamide (DMF), diethylacetamide (DEAc), dipropylacetamide (DPAc), ethanol, propanol, butanol, hexanol, ethylene glycol, tetrachlorethylene, propylene glycol, toluene, turpentine, methyl acetate, ethyl acetate, petroleum ether, cresol, glycerol, and the like.

Further, an aqueous cleaning liquid can be used in the pressing roll cleaning apparatus 200 according to the present disclosure. Specifically, one or more types selected from the group comprising water or alcohol-based compounds may be used.

More specifically, the cleaning liquid may be a mixture of water and an alcohol-based compound, and the alcohol-based compound may be one or more types selected from the group comprising ethanol, propanol, butanol, pentanol, hexanol, isopropanol, heptanol, decanol, octanol, isodecanol, ethylene glycol, diethylene glycol, triethylene glycol, ethylene glycol methyl ether, diethylene glycol methyl ether, triethylene glycol methyl ether, ethylene glycol ethyl ether, diethylene glycol ethyl ether, triethylene glycol ethyl ether, ethylene glycol monopropyl ether, diethylene glycol monopropyl ether, triethylene glycol monopropyl ether, ethylene glycol monobutyl ether, ethylene glycol monohexyl ether, diethylene glycol monohexyl ether and triethylene glycol monohexyl ether. More preferably, the alcohol-based compound may be one or more types selected from the group comprising pentanol, hexanol, heptanol, octanol, and decanol.

The cleaning liquid may contain acetone in an amount of 10 to 40% by weight, or 20 to 30% by weight, or 30% by weight, based on the total weight of the cleaning liquid. Similarly, in the cleaning liquid, water may be contained in an amount of 60 to 90% by weight, or 70 to 80% by weight, or 70% by weight, based on the total weight of the cleaning liquid.

The drying unit 240 dries the surface of the pressing roll 100 cleaned with the cleaning liquid. The drying unit 240 serves to dry the surface of the pressing roll 100 by heating and/or blowing. Foreign materials may be dried and removed from the roll surface by heating and/or blowing, and residual foreign materials in liquid form may be removed by evaporation by heating and/or blowing. The drying unit 240 may be a heater type that directly applies heat to the surface of the pressing roll 100, or may be a hot air drying type that applies hot air or the like to the surface of the pressing roll 100.

Further, the pressing roll cleaning apparatus 200 further includes a control unit (not shown) that controls the sensor unit 210, the cleaning unit 220, the cleaning liquid supply unit 230, the drying unit 240, and the like. The control unit receives input of data from the sensor unit 210 and controls whether or not the cleaning unit 220, the cleaning liquid supply unit 230, and the drying unit 240 operate.

On the other hand, even in the first cleaning mode, the pressing roll cleaning apparatus 200 is fixed similarly to the second cleaning mode, and the first cleaning mode can be performed while rotating the pressing roll 100 if necessary. Alternatively, in the first cleaning mode, the pressing roll 100 does not necessarily have to rotate in order to manufacture electrodes, and thus, various modifications and changes can be made depending on the case, for example, each component of the pressing roll cleaning apparatus 200, such as the sensor unit 210, the cleaning unit 220, the cleaning liquid supply unit 230, and the drying unit 240, may move on the surface of the pressing roll 100 simultaneously or individually.

On the other hand, in the second cleaning mode, the surface of the pressing roll 100 is cleaned while pressing the electrode on the pressing roll 100, so that the use of water and aqueous cleaning liquid is limited so as not to affect the quality of the pressed electrode. However, in the first cleaning mode, since the electrode is not pressed by the pressing roll 100, water, acetone, an aqueous cleaning liquid, or a mixture thereof may be used. In such a case, after cleaning in the first cleaning mode, the surface of the pressing roll 100 is dried with a cloth or a drying device, water is drained from the bottom of the equipment, and then the electrode roll-pressing process is performed again, so that it may not affect the quality of the electrodes produced.

A plurality of the pressing roll cleaning apparatuses 200 themselves may be provided, and the pressing roll cleaning apparatus 200 for the first cleaning mode and the pressing roll cleaning apparatus 200 for the second cleaning mode may be provided separately. Alternatively, one pressing roll cleaning apparatus 200 may be provided, but a plurality of cleaning liquid supply units 230 may be provided, and an oil-based cleaning liquid or an aqueous cleaning liquid may be supplied as needed. That is, some of the plurality of cleaning liquid supply units 230 may supply an oil-based cleaning liquid in the second cleaning mode or in both the first cleaning mode and the second cleaning mode, and the residual parts may supply an aqueous cleaning liquid in the first cleaning mode.

Next, a method for automatically cleaning a pressing roll used in the electrode roll-pressing process according to an embodiment of the present disclosure (hereinafter referred to as "pressing roll cleaning method") will be described.

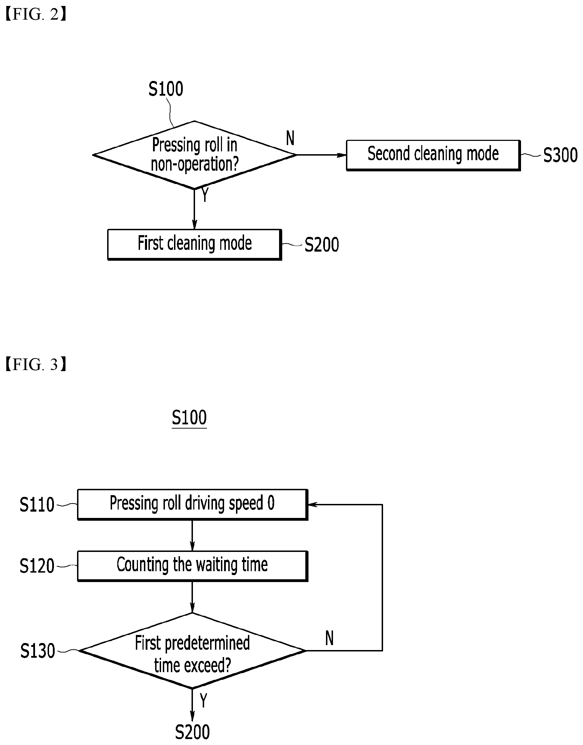

FIGS. 2 to 5 illustrate flowcharts of the pressing roll cleaning methods according to embodiments of the present disclosure.

The cleaning method of a pressing roll comprises a step of determining whether or not the pressing roll is in a non-operative state (S100); a step of cleaning the pressing roll 100 in a first cleaning mode when the pressing roll 100 is in a non-operative state (S200); and a step of cleaning the pressing roll 100 in a second cleaning mode when the pressing roll 100 is in an operative state (S300).

The step of cleaning in a first cleaning mode (S200) and the step of cleaning in a second cleaning mode (S300) may be performed by a cleaning unit 220, a cleaning liquid supply unit 230, a drying unit 240, a control unit, and the like of the pressing roll cleaning apparatus 200. These components of the pressing roll cleaning apparatus 200 may be configured in a plurality of numbers, so that the apparatus 200 for cleaning in the first cleaning mode and the apparatus 200 for cleaning in the second cleaning mode may be provided separately. Alternatively, the step of cleaning in the first cleaning mode (S200) and the step of cleaning in the second cleaning mode (S300) may be performed using the pressing roll cleaning apparatus 200, respectively. In the step of cleaning in the second cleaning mode (S300), a cleaning method used in the electrode roll-pressing process at the time of manufacturing a conventional electrode can also be applied.

As mentioned above, the first cleaning mode is a mode in which cleaning is performed on the pressing roll 100 in a state that an electrode roll-pressing process on the pressing roll 100 stops. The second cleaning mode is a mode in which an electrode roll-pressing process is performed on the pressing roll 100 and at the same time, cleaning is performed on the pressing roll 100. In the first cleaning mode, the electrode roll-pressing process is stopped and the pressing roll 100 is separated from the electrode sheet and the electrode sheet is not pressed. Therefore, since the section of the electrode sheet adjacent to the pressing roll 100 is tagged as a defective section, and then performs disposal of defects, there is no problem with the quality of the final produced electrode even if the pressing roll 100 is cleaned in the first cleaning mode. In some cases, in the case where the quality of the electrode to be pressed may not be affected even if the pressing roll 100 is cleaned, such as the electrode sheet being not located on the pressing roll 100, cleaning in the first cleaning mode may be usually performed by changing at least one of the type of the cleaning liquid, the frequency and amount of supply of the cleaning liquid, and the moving speed of the cleaning cloth used in the second cleaning mode performed during the electrode roll-pressing process. However, this is not necessarily the case in the present disclosure, and the type of the cleaning liquid, the frequency and amount of supply of the cleaning liquid, and the moving speed of the cleaning cloth used in the second cleaning mode are made the same as those in the first cleaning mode, so that cleaning can also be performed in the first cleaning mode in a state that the electrode roll-pressing process stops.

There may be roughly two conditions for determining whether or not the pressing roll 100 is in a non-operative state. The conditions for determining that the operation of the equipment including the pressing roll 100 for electrode manufacture is stopped and in a waiting state, that is, in a non-operative state, are as follows. In one aspect, a predetermined time must exceed, while the pressing roll 100 maintains the rotation speed as zero. In another aspect, a predetermined time must exceed, while the pressing roll 100 is at a predetermined waiting position. "The pressing roll 100 is at a predetermined waiting position" means a position where the pressing roll 100 cannot press the electrode (electrode sheet). For example, the pressing roll 100 may be at a position where it maintains a prescribed distance from the travelling position of the electrode sheet. For example, when an electrode is pressed with a pair of pressing rolls 100 in an electrode roll-pressing process, the interval between the pair of pressing rolls 100 may be farther apart than the thickness of the electrode. However, the present disclosure is not limited thereto, and depending on the case, this may mean the case where the operation of the equipment is completely completed and the pressing roll 100 is automatically moved to a pre-designated location for cleaning, inspection, and the like, so that that position is maintained, which can be modified, changed and applied in various ways.

On the other hand, only when the conditions of both the rotation speed of the pressing roll 100 and the waiting position of the pressing roll 100 are satisfied, it can be determined that the pressing roll 100 is in a non-operative state, but depending on the environment in which the embodiments are implemented, it can be determined that the pressing roll 100 is in a non-operative state when one of two conditions is satisfied.

More specifically, referring to FIG. 3, the step of determining whether or not the pressing roll 100 is in a non-operative state (S100) comprises: a step of receiving input of the rotation speed (driving speed) of the pressing roll 100 (S110-1); a step of counting the waiting time of the pressing roll 100 when the rotation speed of the pressing roll 100 is zero (S120-1); and a step of determining that the pressing roll 100 is in a non-operative state when the first predetermined time exceeds in a state that the rotation speed of the pressing roll 100 is zero (S130). Herein, the waiting time means the time that maintain a state that the rotation speed of the pressing roll 100 is zero. In step S110-1 and step S120-1, the rotation speed of the pressing roll 100 may be detected by a speed sensor, and the counting may be performed based on the time when a drive stop command is transmitted to the pressing roll 100 from a control unit (not shown) connected to the pressing roll 100. Thus, the present disclosure can be applied in various ways.

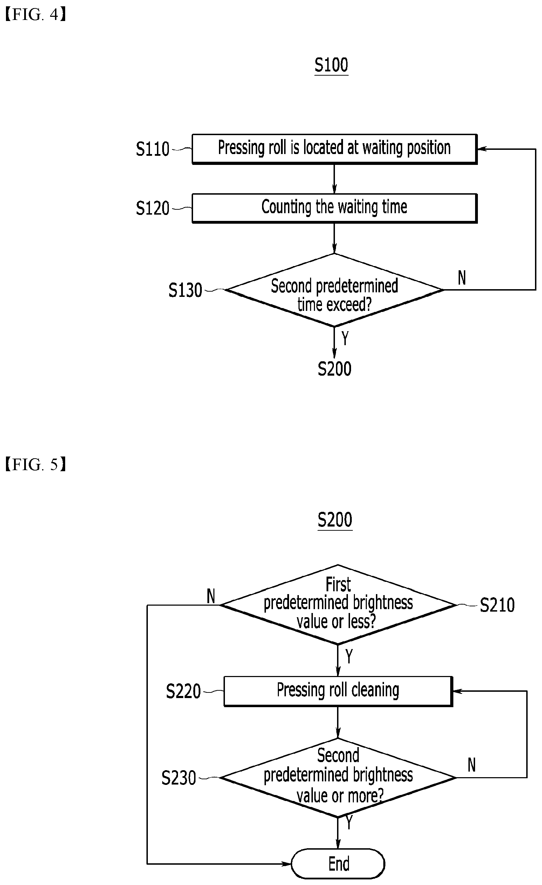

Alternatively, referring to FIG. 4, the step of determining whether or not the pressing roll 100 is in a non-operative state (S100) comprises: a step of receiving input of the position of the pressing roll 100 (S110-2); a step of counting the waiting time of the pressing roll 100 when the pressing roll 100 is at a predetermined waiting position (S120-2); and a step of determining that the pressing roll 100 is in a non-operative state when a second predetermined time exceeds in a state where the pressing roll 100 is at a predetermined waiting position (S130). Herein, the waiting time means the time that maintain a state that the pressing roll 100 is at a predetermined waiting position. In step S110-2 and step S120-2, the position of the pressing roll 100, such as whether or not it has moved toward the electrode or away from the electrode, can be sensed using a position sensor or the like. Alternatively, the pressing force of the pressing roll 100 can be sensed with a pressure sensor such as a load cell to indirectly sense the waiting position of the pressing roll 100.

Alternatively, it may also be determined that the pressing roll 100 is in a non-operative state only when both conditions are satisfied.

For example, the steps illustrated in FIG. 3 may be performed first, and then the steps illustrated in FIG. 4 may be performed in sequence. That is, if a first predetermined time has exceeded in a state that the rotation speed of the pressing roll 100 is zero, and then a second predetermined time has exceeded in a state that the pressing roll 100 is at a predetermined waiting position, it may also be finally determined that the pressing roll 100 is in a non-operative state.

Conversely, the steps illustrated in FIG. 4 may be performed first, and then the steps illustrated in FIG. 3 may be performed in sequence. That is, if the second predetermined time has exceeded in a state that the pressing roll 100 is at a predetermined waiting position, and then the first predetermined time has exceeded in a state that the rotation speed of the pressing roll 100 is zero, it may also be finally determined that the pressing roll 100 is in a non-operative state.

Alternatively, the steps illustrated in FIGS. 3 and 4 may be performed at the same time. Steps (S110-1) and (S110-2) are performed at the same time, and then steps (S120-1) and (S120-2) are performed at the same time. When a first predetermined time exceeds in a state that the rotation speed of the pressing roll 100 is zero and a second predetermined time exceeds in a state that the pressing roll 100 is at a predetermined waiting position, it may also be determined (S130) that the pressing roll 100 is in a non-operative state. To explain further, the rotation speed and position of the pressing roll 100 are respectively input. When the rotation speed of the pressing roll 100 is zero, the waiting time of the pressing roll 100 is counted. At the same time, when the pressing roll 100 is at the waiting position, the waiting time of the pressing roll 100 is counted. When a first predetermined time exceeds in a state that the rotation speed of the pressing roll 100 is zero and a second predetermined time exceeds in a state that the pressing roll 100 is at the waiting position, it may also be determined that the pressing roll 100 is in a non-operative state.

Each of the first predetermined time and the second predetermined time is, for example, a time selected from any one of more than 0 minutes and 100 minutes or less, but the present disclosure is not limited to those described above, and each of the first predetermined time and the second predetermined time can be appropriately selected in accordance with various environments.

Referring to FIG. 5, the step of cleaning the pressing roll 100 in a first cleaning mode when the pressing roll 100 is in a non-operative state (S200) comprises: a step of measuring the brightness value of the surface of the pressing roll 100 using a sensor unit 210 (S210); a step of cleaning the pressing roll 100 for a third predetermined time using the cleaning unit 220 when the brightness value of the surface of the pressing roll 100 is less than or equal to the first predetermined brightness value (S220); and a step of measuring the brightness value of the surface of the cleaned pressing roll 100 and determining whether or not the brightness value is greater than or equal to a second predetermined brightness value (S230).

At this time, the second predetermined brightness value is greater than the first predetermined brightness value. As the brightness value is larger, the pressing roll is clearer. Each of the first predetermined brightness value and the second predetermined brightness value is any one of the brightness value between 0 and 100%, and can be appropriately selected in accordance with various environments. For example, the first predetermined brightness value may be 40% and the second predetermined brightness value may be 80%. The third predetermined time is, for example, a time selected from any one of 3 minutes to 10 minutes, for example, 5 minutes, but the present disclosure is not limited to those described above, and the third predetermined time can be appropriately selected in accordance with various environments.

In regard to step S210, in the second cleaning mode, the quality of the electrode may deteriorate due to cleaning, and thus, the type or amount of the cleaning liquid used may be limited. In some cases, foreign materials, residues, or contaminants 110 that are not removed even in the second cleaning mode may remain on the surface of the pressing roll 100. Thereby, the brightness value of the surface of the pressing roll 100 may be slightly low. In accordance with the environment in which embodiments are implemented (i.e., in accordance with the type of active material of the electrode pressed by the pressing roll 100, the cleaning degree of the second cleaning mode, etc.), the operator may preset a first predetermined brightness value of the surface of the pressing roll 100 at which the first cleaning mode should be started.

On the other hand, in step S210, if the brightness value of the surface of the pressing roll 100 exceeds the first predetermined brightness value, the first cleaning mode is not performed and is immediately ended.

After cleaning of the pressing roll 100 is performed for a third predetermined time in step S220, the brightness value of the pressing roll 100 is measured in step S230, and it is determined whether or not the brightness value is greater than or equal to a second predetermined brightness value.

When the surface of the pressing roll 100 becomes clean and the brightness value increases, that is, when the brightness value of the surface of the pressing roll 100 is greater than or equal to the second predetermined brightness value, the step of cleaning in the first cleaning mode is automatically ended. However, if foreign materials, residues or contaminants 110 still remain on the surface of the pressing roll 100 and the brightness value of the surface of the pressing roll 100 is less than the second predetermined brightness value, a step of cleaning the pressing roll 100 for a third predetermined time (S220) is performed again. That is, step S220 is repeatedly performed until the end of the first cleaning mode is declared in step S230, that is, until the step of cleaning in the first cleaning mode is automatically ended.

Thereby, when the pressing roll 100 is in a non-operative state, the pressing roll 100 can be automatically cleaned, unlike the conventional case where the operator manually cleans the pressing roll 100 one by one. To explain further, the brightness value is measured, the pressing roll 100 is cleaned for a third predetermined time, and the brightness value is measured again. If the desired brightness value (i.e., the second predetermined brightness value) is not reached, the same process of cleaning the pressing roll 100 is continuously repeated again for a third predetermined time, thereby making it possible to automate the cleaning of the pressing roll 100 when the pressing roll 100 is in a non-operative state.

Further, according to embodiments of the present disclosure, the pressing roll for electrode manufacture is cleaned even when the pressing roll is not operated, while the cleaning of the pressing rolls starts and ends automatically, thereby increasing the cleaning efficiency of the pressing rolls. Thereby, the manufacturing efficiency of the electrode process also increases. Furthermore, since the electrode is pressed with a pressing roll cleaned according to an improved cleaning method, the performance of the battery can be improved.

Although preferred embodiments of the present disclosure have been described above, the scope of the present disclosure is not limited thereto, and various modifications and improvements can be made by those skilled in the art using the basic concept of the present disclosure as defined in the appended claims, which also fall within the scope of the present disclosure.

### [Description of Reference Numerals]

100: pressing roll
110: foreign materials
200: pressing roll cleaning apparatus
210: sensor unit
220: cleaning unit
230: cleaning liquid supply unit
240: drying unit

## Claims

1. A method for automatically cleaning a pressing roll used in an electrode roll-pressing process, the method comprising the steps of:
determining whether or not the pressing roll is in a non-operative state; and
cleaning the pressing roll in a first cleaning mode when the pressing roll is in the non-operative state,
wherein, in the first cleaning mode, cleaning of the pressing roll is performed in a state that the electrode roll-pressing process on the pressing roll stops.

2. The method according to claim 1, wherein:
the method further comprises cleaning the pressing roll in a second cleaning mode when the pressing roll is in an operative state,
wherein, in the second cleaning mode, the cleaning of the pressing roll is performed, while the electrode roll-pressing process on the pressing roll is performed at the same time.

3. The method according to claim 1, wherein:
at least one of a type of cleaning liquid, a frequency and amount of supply of the cleaning liquid, and a moving speed of a cleaning cloth is different in the first cleaning mode and the second cleaning mode.

4. The method according to claim 1, wherein:
the determining whether or not the pressing roll is in the non-operative state comprises:
receiving input of a rotation speed of the pressing roll;
counting a waiting time of the pressing roll when the rotation speed of the pressing roll is zero; and
determining that the pressing roll is in the non-operative state when a first predetermined time exceeds in a state that the rotation speed of the pressing roll is zero.

5. The method according to claim 1, wherein:
the determining whether or not the pressing roll is in the non-operative state comprises:
receiving input of a position of the pressing roll;
counting a waiting time of the pressing roll when the pressing roll is at a predetermined waiting position; and
determining that the pressing roll is in the non-operative state when a second predetermined time exceeds in a state where the pressing roll is at the predetermined waiting position.

6. The method according to claim 1, wherein:
the determining whether or not the pressing roll is in the non-operative state comprises:
receiving input of a rotation speed and position of the pressing roll, respectively;
counting a waiting time of the pressing roll when the rotation speed of the pressing roll is zero;
counting the waiting time of the pressing roll when the pressing roll is at a predetermined waiting position; and
determining that the pressing roll is in the non-operative state when a first predetermined time exceeds in a state that the rotation speed of the pressing roll is zero and a second predetermined time exceeds in a state that the pressing roll is at the predetermined waiting position.

7. The method according to claim 1, wherein:
the cleaning the pressing roll in the first cleaning mode comprises:
measuring a brightness value of a surface of the pressing roll; and
cleaning the pressing roll for a third predetermined time when the brightness value of the surface of the pressing roll is less than or equal to a first predetermined brightness value.

8. The method according to claim 7, wherein:
the cleaning the pressing roll in the first cleaning mode further comprises:
measuring the brightness value of the surface of the cleaned pressing roll and determining whether or not the brightness value is greater than or equal to a second predetermined brightness value,
wherein the cleaning in the first cleaning mode is automatically ended when the brightness value of the surface of the pressing roll is greater than or equal to the second predetermined brightness value.

9. The method according to claim 7, wherein:
the cleaning the pressing roll in the first cleaning mode further comprises:
measuring the brightness value of the surface of the cleaned pressing roll and determining whether or not the brightness value is greater than or equal to a second predetermined brightness value,
wherein the cleaning the pressing roll for the third predetermined time is repeated when the brightness value of the surface of the pressing roll is less than the second predetermined brightness value.

10. The method according to any one of claims 7 to 9, wherein:
the third predetermined time is any time selected from 3 minutes to 10 minutes.

11. The method according to claim 8 or 9, wherein:
the second predetermined brightness value is greater than the first predetermined brightness value.

12. The method according to claim 8 or 9, wherein:
the first predetermined brightness value is 40%, and the second predetermined brightness value is 80%.

13. The method according to claim 1, wherein:
the frequency and amount of supply of the cleaning liquid in the first cleaning mode are greater than the frequency and amount of supply of the cleaning liquid in the second cleaning mode.

14. The method according to claim 1, wherein:
a cleaning liquid provided in the first cleaning mode is an oil-based cleaning agent.

15. The method according to claim 1, wherein:
a cleaning liquid provided in the first cleaning mode is any one selected from water, acetone, an aqueous cleaning liquid, or a combination of at least two selected from them.

16. The method according to claim 1, wherein:
a cleaning liquid provided in the second cleaning mode is an oil-based cleaning agent.

17. An apparatus for automatically cleaning a pressing roll for performing the method of claim 1, the apparatus comprising:
a sensor unit that measures a brightness value of a surface of the pressing roll;
a cleaning liquid supply unit that supplies a cleaning liquid to the pressing roll;
a cleaning unit that cleans the surface of the pressing roll; and
a control unit that receives input of data from the sensor unit and controls whether or not the cleaning liquid supply unit and the cleaning unit operate.

18. The apparatus according to claim 17, wherein:
the cleaning liquid supply unit is provided in a plurality of numbers,
some of the plurality of cleaning liquid supply units supply an oil-based cleaning agent, and
remainder of the plurality of cleaning liquid supply units supplies any one of water, acetone, an aqueous cleaning liquid, or a combination of at least two selected from them.

19. The apparatus according to claim 17, wherein:
the apparatus is provided in a plurality of numbers, and
some of the plurality of apparatuses are apparatuses for the first cleaning mode, and remainder of the plurality of apparatuses are apparatuses for the second cleaning mode.
